# EUROPÄISCHE PATENTSCHRIFT

(11) **EP 4 066 614 B1**
(45) Veröffentlichungstag und Bekanntmachung des Hinweises auf die Patenterteilung: **13.03.2024**
(21) Anmeldenummer: 22164361.2
(22) Anmeldetag: 25.03.2022
(51) Int. Cl.: A01C 15/12, A01C 15/18, A01C 17/00, A01C 19/02

(54) **STREUFAHRZEUG MIT GETEILTEM KRATZBODEN UND VARIABLER GESCHWINDIGKEITSREGULIERUNG**
SPREADING VEHICLE WITH DIVIDED SCRAPER FLOOR AND VARIABLE SPEED REGULATION
VÉHICULE D'ÉPANDAGE POURVU DE FOND MOUVANT DIVISÉ ET DE RÉGULATION DE VITESSE

(30) Priorität: 31.03.2021 DE 102021108230
(43) Veröffentlichungstag der Anmeldung: 05.10.2022
(73) Patentinhaber: B. Strautmann & Söhne GmbH u. Co. KG, 49196 Bad Laer (DE)
(72) Erfinder: WEGMANN, geb. MALEWSKI, Benjamin, 49497 Mettingen (DE); OELGESCHLÄGER, Oliver, 49163 Bohmte (DE)
(74) Vertreter: Dr. Träger & Strautmann PAe PartG mbB

(56) Entgegenhaltungen:
- US-B1- 9 585 306
- US-B2- 7 044 408

## Beschreibung

Die Erfindung betrifft ein landwirtschaftliches Streufahrzeug zur Ausbringung von organischem Dünger und Kalk nach dem Oberbegriff des Anspruchs 1. Das Streufahrzeug umfasst einen Laderaum zur Aufnahme von Düngematerial mit zwei Seitenwänden, einer Stirnwand und einem Boden mit einer Transporteinrichtung sowie ein heckseitig angebrachtes Streuwerk zur Ausbringung des Düngematerials. Weiterhin weist das Streufahrzeug eine Antriebseinrichtung für die Transporteinrichtung sowie ein Fahrgestell mit wenigstens einer Fahrzeugachse auf.

Im Arbeitseinsatz wird ein solches Streufahrzeug häufig von einer Zugmaschine, beispielsweise einem Traktor, gezogen. Alternativ dazu kann es jedoch auch einen eigenen Antrieb aufweisen und eine selbstfahrende Arbeitsmaschine ausbilden.

Aus DE 197 32 788 A1 ist eine Vorrichtung zum Abgeben von Material bekannt. Die Vorrichtung umfasst eine zweigeteilte Fördereinrichtung mit zwei Fördersträngen. Die beiden Förderstränge umfassen je eine Antriebswelle und werden von einem gemeinsamen Getriebe angetrieben. Die erforderlichen Antriebseinrichtungen sind in einem zwischen den Fördersträngen angeordneten Getriebetunnel untergebracht. Nachteilig hieran ist, dass der für den Getriebetunnel bzw. für der das hierunter angebrachte Getriebe erforderliche Bauraum relativ groß ist und unter ungünstigen Verhältnissen das von den Fördersträngen zu transportierende Streugut von keinem der beiden Förderstränge erfasst wird, sondern sich vielmehr auf dem Getriebetunnel ablegt.

Aus DE 203 19 124 U1 ist eine Breitstreueinrichtung an einem Streufahrzeug bekannt. Die Breitstreueinrichtung umfasst ein Fräswerk mit zwei Fräswalzen und einem darunter angeordneten Tellerstreuwerk mit zwei Streutellern. Das Tellerstreuwerk ist um eine quer zur Fahrtrichtung angeordnete Schwenkachse zwischen einer ansteigenden Lage und einer abfallenden Lage schwenkbar.

Aus DE 299 06 960 U1 ist eine Breitstreueinrichtung an einem Streufahrzeug bekannt, die ein Tellerstreuwerk mit vier Streutellern umfasst, wobei zwischen zwei größeren Streutellern zwei kleinere Streuteller angeordnet sind.

Aus US 9 585 306 B1 ist ein Düngerstreuer mit einem Zweiteller-Streuwerk bekannt. Der Streuer ermöglicht eine teilflächenspezifische Düngung unter Einbeziehung von GPS-Daten. Um die momentane Streumenge zu variieren, kann die Geschwindigkeit, mit der sich die Streuteller drehen, variiert werden.

Aus US 7 044 408 B2 ist ein Düngerstreuer mit einem Zweiteller-Streuwerk bekannt. Um eine Vielzahl von Materialien mit unterschiedlichen Eigenschaften gleichmäßig auf der Bodenoberfläche zu verteilen, weisen die Streuteller verstellbare Schleudereinheiten auf.

Aus DE 10 2017 120 048 A1 ist ein Streufahrzeug mit einem Zweiteller-Streuwerk bekannt, bei dem die Stellung der beiden Streuteller zueinander variabel ist. Die beiden Streuteller sind quer zur Fahrtrichtung nach außen geneigt, also jeweils nach außen ansteigend oder nach außen abfallend. Durch die seitliche Neigung der Streuteller wird das Streugut nicht waagerecht nach hinten und zur Seite gefördert. Bei einem zur Seite hin ansteigenden Streuteller wird das Streugut vielmehr bogenförmig abgeworfen.

Alternativ kann auch eine geringere Arbeitsbreite erreicht werden. Hierbei werden die Streuteller - quer zur Fahrtrichtung gesehen - nach unten geschwenkt, so dass sie zur Fahrzeugaußenkante hin abfallend geneigt sind. Auf diese Weise wird das Grenzstreuen an Feldrändern ermöglicht.

Weiterhin können Mittel zur individuellen Neigungseinstellung der Streuteller beziehungsweise der Drehebenen der Streuteller quer zur Fahrtrichtung vorgesehen sein.

Durch die Einstellung der Streuteller-Ausrichtung lässt sich somit die Streubreite beidseitig und auch einseitig variieren.

Insbesondere bei einer asymmetrischen Streuteller-Ausrichtung verschlechtert sich jedoch das Streubild, da beiden Streutellern eine gleiche Menge an Streugut zugeführt wird. Wird bei einem keilförmigen schmaler werden Ackerzuschnitt im Bereich des Feldrandes lediglich ein Streuteller nach und nach so verschwenkt, dass sich die Streubreite dieses Streutellers reduziert, so wird auf dieses schmaler werdende Teilstück die gleiche Streumenge ausgebracht, wie zuvor auf dem breiteren Feldstück. Die Ausbringmenge pro m² steigt auf der Seite des nach unten geschwenkten Streutellers also an, während sie auf der Seite des anderen - nicht geschwenkten - Streutellers konstant bleibt.

Durch die Einstellung des Abwurfwinkels lässt sich an Feldrändern zwar die Streubreite reduzieren, in dem reduzierten Streubereich wird jedoch zu viel Dünger pro m² ausgebracht. Eine Überdüngung ist jedoch insbesondere dann, wenn der Feldrand an einen Bachlauf oder ein anderes Gewässer angrenzt, unerwünscht, weil hierdurch insbesondere zu viel Nitrat in das Gewässer gelangen kann.

Mittels der bekannten Grenzstreueinrichtung lässt sich somit das Streubild insbesondere in Grenznähe nicht ausreichend anpassen.

Aufgabe der Erfindung ist es, die beschriebenen Nachteile zu beseitigen und ein Streufahrzeug vorzuschlagen, mit dem auch in Grenznähe das Streugut über die Ausbringbreite zumindest weitgehend gleichmäßig verteilt wird.

Diese Aufgabe wird gelöst durch ein Streufahrzeug mit den Merkmalen des Anspruchs 1. Definitionen:
Unter einem Streufahrzeug wird ein gezogenes oder selbstfahrendes Fahrzeug mit wenigstens einer Fahrzeugachse verstanden, das - im Gegensatz zu einem Kunstdünger oder Schleuderstreuer - zur Ausbringung von organischem Dünger und Kalk vorgesehen ist. Unter organischem Dünger werden Streugüter wie Kompost, Stallmist, Gärsubstrat, Bio-Klärschlämme etc. verstanden.

Unter einer Transporteinrichtung wird eine Einrichtung zum Transport des im Laderaum des Streufahrzeuges enthaltenen Streuguts verstanden. Eine Transporteinrichtung kann beispielsweise ein um den Boden des Laderaums umlaufendes Förderband oder ein sogenannter Kratzboden sein. Ein Kratzboden umfasst in der Regel zwei Kettensträngen, die jeweils von auf Wellen gelagerten Kettenrädern oder Taschenrädern bewegt werden. Auf den Ketten sind in regelmäßigen Abständen Mitnehmerleisten zur Beförderung des Streuguts angebracht. Eine Transporteinrichtung kann ein oder mehr Förderstränge umfassen. Die erfindungsgemäßen Streufahrzeuge umfassen wenigstens zwei Fördersträng e.

Unter einem Streuwerk wird ein Aggregat zur Verteilung von Streugut verstanden. Ein Streuwerk kann horizontale oder vertikale Streuwalzen aufweisen. Soweit horizontale Streuwalzen vorgesehen sind, kann unterhalb der Streuwalzen ein sogenanntes Breitstreuwerk, auch Tellerstreuwerk genannt, angeordnet sein. Das Tellerstreuwerk umfasst in der Regel zwei oder vier Teller mit darauf angebrachten Wurfschaufeln. Mit einem Tellerstreuwerk können Streubreiten von 20 Metern bis 30 Metern realisiert werden, wobei die ausgebrachte Streumenge sich ausgehend von der Mitte zu den Seiten hin reduziert. Die sich zu den Seiten hin reduzierenden Streumengen können durch eine überlappende Fahrweise ausgeglichen werden, so dass im Ergebnis eine weitgehend homogene Streugutverteilung auf einer Ackerparzelle möglich ist.

Unter einem Stauschieber wird eine vertikal verschiebbare Wand verstanden, die zwischen Laderaum und Streuwerk angebracht ist und nach unten hin durch den Förderboden des Streufahrzeuges begrenzt wird. Im Arbeitseinsatz muss der Stauschieber zumindest soweit angehoben werden, dass der Förderboden zumindest etwas Streugut unter dem Stauschieber hindurch Richtung Streuwerk fördern kann. Die Höhenposition des Stauschiebers definiert eine Stauschieberöffnungsweite, die einen unmittelbaren Einfluss auf die Menge an Streugut hat, die dem Streuwerk zugeführt wird.

Unter dem englischsprachigen Begriff Precision Farming wird ein Verfahren der ortsdifferenzierten und zielgerichteten Bewirtschaftung landwirtschaftlicher Nutzflächen verstanden. Ziel des "Präzisionsackerbaus" ist es dabei, die Unterschiede des Bodens und der Ertragsfähigkeit innerhalb eines Feldes zu berücksichtigen. Die Positionen der Bearbeitungsmaschinen werden auf den Flurstücken erfasst und die Maschinen wiederum erfassen und dokumentieren die Kennwerte (zum Beispiel Ertrag) schon während der Bearbeitung und/oder Ernte. Diese Daten werden dann ausgewertet und zu Applikationskarten weiterverarbeitet werden. Durch die Erstellung einer Applikationskarte kann die Sollwertmenge innerhalb eines Schlages je nach Bodenbeschaffenheit variieren. Eine Applikationskarte lässt sich über ein Bedienterminal, beispielsweise mittels eines USBsticks, in die Steuerung eines Streufahrzeuges einlesen und dort verarbeiten, so dass die mit dem Streufahrzeug durchzuführende Düngung darauf abstimmbar ist. Diese Bewirtschaftung wird *teilflächenspezifisch* genannt, da innerhalb eines großen Feldes (Schlag) die Auswirkungen unterschiedlicher Böden berücksichtigt werden können.

Unter einem Wiegesystem wird ein System zur Erfassung des auf einem Streufahrzeug momentan geladenen Streuguts verstanden. Vorzugsweise wird die Menge des Streuguts dynamisch erfasst und geregelt. Dies geschieht insbesondere, indem beim Ausbringen des Streugutes die Gewichtsabnahme erfasst und mit einer vordefinierten Soll-Ausbringmenge verglichen wird.

Als Streuwinkel wird ein Winkelbereich bezeichnet, innerhalb dessen ein Ackerboden mit von einem Streuwerk ausgebrachten Streugut beaufschlagt wird.

Die Transporteinrichtung umfasst zwei oder mehr Förderstränge, die erfindungsgemäß mit Einzelantrieben unabhängig voneinander antreibbar sind. Somit sind die Förderstränge von einer am Streufahrzeug vorgesehenen Antriebseinrichtung mit unterschiedlichen Geschwindigkeiten antreibbar.

Bei einer Fördereinrichtung mit zwei Fördersträngen sind die Einzelantriebe vorzugsweise nicht zwischen den Fördersträngen, sondern an den Außenseiten der Förderstränge angeordnet. Hierdurch ergibt sich der Vorteil, dass die beiden Förderstränge in der Mitte des Fahrzeuges, also dort, wo sie zueinander benachbart sind, sehr eng nebeneinander geführt werden sollen. Es ist also kein mittig im Fahrzeug angeordneter Getriebetunnel erforderlich und es besteht nicht die Gefahr, dass das zu transportierende Streugut von den beiden Fördersträngen nicht vollständig erfasst wird.

Werden die Förderstränge mit unterschiedlichen Geschwindigkeiten angetrieben, so ist die Menge des dem Streuwerk zugeführten Streugutes über die Breite des Streufahrzeuges nicht konstant. Da das Streufahrzeug einen einzigen Laderaum hat, an dessen Boden die Förderstränge laufen und das Streugut im Arbeitseinsatz Richtung Streuwerk fördern, gibt es keine eindeutige Grenze zwischen den Streugut-Förderbereichen. Im Übergangsbereich zwischen zwei Fördersträngen kommt es vielmehr zu Mitnahmeeffekten. Unabhängig davon reduziert sich jedoch die Fördermenge in Richtung des Förderstrangs mit der geringeren Geschwindigkeit.

Da das Streuwerk im oberen Bereich wenigstens eine horizontale Walze aufweist, die das Streugut auflockert, zerkleinert und den unter der horizontalen Walze angeordneten Streutellern zuführt, wird der genannte Mitnahmeeffekt im Übergangsbereich und die sich zur Seite hin sukzessiv verändernde Streumenge im Ergebnis derart ausgeglichen, dass bei einem Zweiteller-Streuwerk dem einen Streuteller mehr Streugut zugeführt wird und dem anderen weniger. Die mit hoher Drehzahl rotierenden Streuteller beschleunigen die auf sie fallenden Streugutpartikel und werfen diese nach hinten und zum Teil auch in seitlicher Richtung ab. Beide Streuteller legen somit jeweils einen gleichmäßigen Streuteppich ab, wobei jedoch ein Streuteppich eines mit weniger Streugut beaufschlagten Streutellers eine geringe Masse pro m² aufweist als ein Streuteppich eines mit mehr Streugut beaufschlagten Streutellers.

Bei im Übrigen gleichen Parametern, insbesondere gleicher Streuteller-Drehzahl und gleichem Streuwinkel, ergibt sich somit durch den mit weniger Streugut beaufschlagten Streuteller ein Streubereich mit einer reduzierten Streumasse pro m². Dieser Effekt lässt beispielsweise nutzen um Feldrandflächen, insbesondere an Gewässer angrenzende Feldrandflächen, weniger stark zu düngen. Hierdurch kann einerseits beispielsweise der Nitrateintrag in ein angrenzendes Gewässer reduziert und andererseits dennoch eine effektive Düngung zur Förderung des Pflanzenwachstums erzielt werden.

Vorzugsweise umfasst die Antriebseinrichtung je Förderstrang einen Einzelantrieb zum Antrieb einer für den jeweiligen Förderstrang vorgesehene Antriebswelle. Bei einem Streufahrzeug mit zwei Fördersträngen sind die Antriebswellen vorzugsweise einzeln gelagert und werden hydraulisch angetrieben.

Das erfindungsgemäße Streufahrzeug umfasst weiterhin:
- eine Steuerungseinrichtung mit einem Datenspeicher, in welchem Werte für die Fördermenge je Förderstrang in Abhängigkeit von der jeweiligen Antriebsgeschwindikeit des Förderstrangs und/oder des Düngemittelmaterials hinterlegt sind,
- eine Wiegeeinrichtung zur kontinuierlichen, vorzugsweise dynamischen, Erfassung des Gewichts des im Laderaum befindlichen Düngematerials,
- eine Geschwindigkeitsmesseinrichtung zur Ermittlung einer Momentan-Fahrgeschwindigkeit des Streufahrzeuges oder eine Daten-Schnittstelle zur Übermittlung einer in einem das Streufahrzeug ziehenden Zugfahrzeug gemessenen Momentangeschwindigkeit an die Steuerungseinrichtung.

Mittels der Steuerungseinrichtung wird hierdurch eine Ist-Ausbringmenge je Förderstrang bestimmt. Durch Änderung der Antriebsgeschwindigkeit der Förderstränge wird die Ist-Ausbringmenge je Förderstrang an eine Soll-Ausbringmenge je Förderstrang angepasst beziehungsweise geregelt. Vereinfacht gesagt wird ein Regelkreis zur kontinuierlichen Anpassung der Ist-Ausbringmenge an eine vordefinierte Soll-Ausbringmenge gebildet.

Wenigstens ein Förderstrang kann eine Sensoreinrichtung zur Erfassung der Geschwindigkeit des Förderstrangs umfassen. Vorzugsweise weisen alle Förderstränge eine entsprechende Sensoreinrichtung auf, so dass die Geschwindigkeiten aller Förderstränge erfassbar sind. Die von den Sensoren ermittelten Daten werden an eine Steuerungseinrichtung des Streufahrzeuges übermittelt und dort weiterverarbeitet oder über beispielsweise über ein Display zur Anzeige gebracht. Die Geschwindigkeitsmesseinrichtung unterstützt den Fahrer bei der Anpassung einer Ist-Ausbringmenge an eine gewünschte Soll-Ausbringmenge. Beispielsweise wird dem Fahrer ermöglicht, sich bei der Einstellung der Transporteinrichtung an bekannten Erfahrungswerten zu orientieren.

In einer bevorzugten Ausführungsform sind die Streuteller des Streuwerks unterhalb einer hinteren Kante des Laderaumbodens angeordnet und wenigstens ein Streuteller ist gegenüber der hinteren Kante des Laderaumbodens in Fahrzeuglängsrichtung nach vorne beziehungsweise hinten bewegbar, vorzugsweise verschiebbar.

Der Rotations-Antrieb der Streuteller kann hydraulisch mittels geeigneter Motoren oder mechanisch mittels Gelenkwellen und/oder Getrieben erfolgen. Die Verlagerungsbewegung der Streuteller erfolgt vorzugsweise linear mit einem oder mehreren Hydraulikzylindern. Wird ein einzelner Streuteller gegenüber der hinteren Kante des Laderaumbodens bewegt, so ändert sich auch der Bereich, in dem das Streugut auf diesen Streuteller fällt. Über eine kurze vertikale Strecke, die durch den Abstand von hinterer Kante zu Streuteller gebildet wird, bildet das Streugut einen vertikal fallenden Streugutstrom. Dieser Streugutstrom hat eine Mittelebene, deren Schnittlinie mit dem Streuteller eine Aufgabelinie des Streuguts auf dem jeweiligen Streuteller definiert.

Indem wenigstens ein Streuteller relativ zur hinteren Kante bewegt, vorzugsweise verschoben, wird ändert sich auch die Position der Aufgabelinie auf dem jeweiligen Streuteller. Durch eine Änderung der Aufgabelinie ändern sich die für die Ausbildung des Streubildes relevanten Wurfparameter des Streugutes. Insbesondere ist es durch eine Veränderung der Aufgabelinie eines Streutellers möglich, die Streubreite an eine Flurstückgrenze anzupassen. So können beispielsweise Uferrandstreifen beim Ausbringen des Streuguts berücksichtigt werden.

Es ist somit beispielsweise möglich, die Antriebsstränge der Transporteinrichtung unterschiedlich schnell anzutreiben und so den Streutellern unterschiedlich viel Erntegut zuzuführen. Parallel dazu kann die Aufgabelinie eines oder mehrere Streuteller verschoben werden um hierdurch das Streubild, insbesondere die Streubreite, zu beeinflussen. So lässt sich beispielsweise bei einem Streuteller, dem weniger Streugut zugeführt wird, gleichzeitig durch Veränderung der Aufgabelinie die Streubreite reduzieren. Der Effekt, dass bei weniger zugeführtem Streugut und konstant bleibenden sonstigen Parametern, insbesondere konstant bleibender Auftrefflinie, die ausgebrachte Streumenge pro m² reduziert wird, kann so kompensiert werden.

Im Ergebnis lässt sich der Streuteppich somit auf unterschiedliche Weise variieren und an die jeweiligen Anforderungen anpassen.

Alternativ oder ergänzend zu einer Bewegung eines einzelnen Streutellers kann vorgesehen sein, dass die Streuteller auf einem Streutisch angeordnet sind und der Streutisch insgesamt gegenüber der hinteren Kante des Laderaumbodens in Fahrzeuglängsrichtung nach vorne beziehungsweise hinten bewegbar, vorzugsweise verschiebbar ist.

Hierdurch lassen sich die Streuteller somit gemeinsam verschieben. Die Verstellung des Streutisches insgesamt ist beispielsweise über einen schubladenartigen Verschieberahmen, in dem der Streutisch gelagert ist, möglich. Eine gemeinsame Verschiebung der Streuteller mittels des Streutisches ist konstruktiv weniger aufwendig und damit kostengünstiger als eine Einzel-Verschiebung der Streuteller.

Nicht ausgeschlossen ist die Kombination eines verschiebbaren Streutisches mit einer Einzel-Verschiebeeinrichtung der Streuteller. Eine solche Kombinations-Einrichtung ist zwar konstruktiv aufwendig, erlaubt aber eine besonders individuelle Anpassung der Einstellung von Streutisch und Streutellern an die jeweiligen Anforderungen.

Die Positionsverlagerung eines Streutellers und/oder des Streutisches ist auf unterschiedliche Art realisierbar. Besonders bevorzugt ist es, einen oder mehrere Hydraulikzylinder zur direkten Positionsverlagerung der Streuteller oder indirekten Positionsverlagerung der Streuteller mittels des Streutisches vorzusehen. Die Hydraulikzylinder lassen sich einfach in das in aller Regel am Streufahrzeug vorhandene Hydrauliksystem integrieren und sind den robusten Anforderungen im Arbeitseinsatz ohne weiteres gewachsen.

Vorzugsweise ist eine Sensoreinrichtung vorgesehen, mittels derer die Position der Streuteller und/oder des Streutisches relativ zur hinteren Kante des Laderaumbodens bestimmbar ist. Mit der Sensoreinrichtung lässt sich somit der Ist-Wert einer aktuellen Streuteller- und/oder Streutischeinstellung erfassen. Im zweiten Schritt kann dann die Verstellung von Streuteller und/oder Streutisch erfolgen, indem beispielsweise die aktuelle Einstellung in Richtung einer für eine bestimmte Düngesituation vordefinierte Voreinstellung verändert wird.

In einer weiteren bevorzugten Ausführungsform können die wenigstens zwei Streuteller mit unterschiedlichen Drehzahlen antreibbar sein. Durch die Veränderung der Drehzahl lässt sich die Abwurfgeschwindigkeit des Streuguts und damit die Streubreite variieren. Analog zu einer Veränderung des Aufgabepunktes stellt somit auch eine Streuteller-Drehzahlveränderung eine Möglichkeit zur Beeinflussung des Streubildes beziehungsweise zur Optimierung der Ausbringmenge, insbesondere im Bereich einer Feldgrenze, dar. Zur Erfassung der Streuteller-Drehzahl oder der Drehgeschwindigkeit kann einem oder mehreren Streutellern eine entsprechende Sensoreinrichtung zugeordnet sein.

Alternativ oder ergänzend kann das Streuwerk wenigstens eine verstellbare Grenzstreueinrichtung zur mechanischen Begrenzung eines Streuwinkels umfassen. Eine solche Grenzstreueinrichtung ist in den Wurfbereich des Streugutes einschwenkbar und bildet - im Gegensatz zu einer Streuweitenbegrenzung über die bereits genannten Einstellparameter wie Aufgabepunkt und Streutellerdrehzahl - eine Barriere für das Streugut. Hierdurch kann zusätzliche sichergestellt werden, dass beispielsweise einzelne im Streugut enthaltene Steine nicht über den vorgesehenen Streubereich hinaus, beispielsweise auf eine an das Feld angrenzende öffentlichen Straße, geschleudert werden und dort Schaden anrichten. Die Betätigung der Grenzstreueinrichtung erfolgt vorzugsweise mechanisch oder hydraulisch.

Die Grenzstreueinrichtung kann konstruktiv so ausgelegt und an das Streuwerk gekoppelt sein, dass sie in Form einer ja-nein-Information einen vordefinierten Auswurfbereich entweder freigibt oder verschließt. Beispielsweise kann eine planebene Grenzstreueinrichtung vorgesehen sein, die in Fahrzeuglängsrichtung ausgerichtet und in den Auswurfbereich einschwenkbar ist, um hierdurch sicherzustellen, dass kein Streugut zur Seite hin über die Breite des Streufahrzeuges ausgeworfen wird.

Alternativ dazu ist es aber auch möglich, eine Verstelleinrichtung vorzusehen, mittels derer zwischen Fahrzeuglängsachse und Grenzstreueinrichtung ein Auswurfwinkel einstellbar ist, so dass das Streugut beispielsweise in einem Winkel von 10° - bezogen auf die Fahrzeuglängsachse - über die Fahrzeugbreite hinaus ausgeworfen wird.

In einer bevorzugten Ausführung des Streufahrzeuges ist zwischen Laderaum und Streuwerk ein vorzugweise hydraulisch höhenverstellbarer Stauschieber zur Begrenzung der Menge des dem Streuwerk zugeführten Streuguts vorgesehen. Die Höhenposition des Stauschiebers ist mittels eines Sensors, beispielsweise eines Wegmesssensors bestimmbar. Der Stauschieber begrenzt die dem Streuwerk zugeführte Streumenge nicht nur sondern egalisiert auch den Streugutstrom.

Ergänzend zu dem weiter oben genannten Regelkreis kann das Streufahrzeug eine Positionserfassungseinrichtung, beispielsweise ein GPS-System oder eine Daten-Schnittstelle zur Übermittlung einer in einem das Streufahrzeug ziehenden Zugfahrzeug gemessenen momentanen Ortsposition, umfassen. Hierdurch wird ermöglicht, dass die Steuerungseinrichtung auf Basis der
- von der Positionserfassungseinrichtung,
- von der Wiegeeinrichtung und
- von der Geschwindigkeitsmesseinrichtung - beziehungsweise der über die Daten-Schnittstelle an die Steuerungseinrichtung übermittelten Geschwindigkeitsdaten - die Antriebsgeschwindigkeit der Förderstränge regelt. Eine pro Flächeneinheit ausgebrachte Ist-Düngermenge ist so an eine für diese Flächeneinheit vordefinierte Soll-Ausbringmenge anpassbar und eine zu düngende Fläche kann teilflächenspezifisch gedüngt werden.

Die variable Geschwindigkeitsanpassung der Förderstränge bildet das für das Streufahrzeug realisierte Precision-Farming-Konzept somit vorteilhaft weiter.

Weiterhin kann vorgesehen sein, dass die Steuerungseinrichtung bei der Anpassung der pro Flächeneinheit ausgebrachte Ist-Düngermenge an eine für diese Flächeneinheit vordefinierte Soll-Ausbringmenge nicht nur die Geschwindigkeit der Förderstränge regelt, sondern ergänzend oder alternativ
- die Drehzahl der Streuteller und/oder deren Position relativ zur hinteren Kante der Transporteinrichtung und/oder
- den Streuwinkel der wenigstens einen Grenzstreueinrichtung
- und oder die Höheneinstellung des Stauschiebers
   regelt.

Hierdurch erweitern sich die Möglichkeiten zur Optimierung des Streubildes und die Anpassungsmöglichkeiten.

Im Datenspeicher der Steuerungseinrichtung kann eine Produktdatenbank hinterlegt sein, in welcher Parameterkombinationen aus Fahrgeschwindigkeit und/oder Förderstrang-Antriebsgeschwindigkeit und/oder Streutellerdrehzahl und/oder Streutellerposition und/oder die Position der Grenzstreueinrichtung und/oder Stauschieberöffnungsweite für unterschiedliche Düngermaterialien vordefiniert sind. Mittels der Steuerungseinrichtung sind auf dieser Datenbasis bei Vorgabe eines vordefinierten Düngermaterials die genannten Parameter auf die für dieses Düngermaterial vordefinierten Parameterwerte einstellbar. Hierdurch wird die Bedienung besonders einfach, denn die Bedienperson muss die einzelnen Parameter nicht manuell einstellen oder vorwählen, sondern der Steuerung lediglich mitteilen, welches Streugut ausgebracht werden soll. Die Einstellung der Parameter selbst erfolgt dann automatisch.

Der Datenspeicher kann weiterhin eine Schnittstelle zur Verarbeitung extern übermittelter oder zu übermittelnder Daten aufweisen. Bei dieser Schnittstelle kann es sich beispielsweise eine USB-Schnittstelle oder eine Sende/Empfangseinheit zum drahtlos Ein- und/oder Auslesen von Daten in den Datenspeicher handeln. Mittels der Schnittstelle sind
- Steuerdaten von einem externen Leitsystem an die Steuerungseinrichtung des Streufahrzeuges und/oder
- von den Sensoren des landwirtschaftlichen Streufahrzeuges ermittelte Ist-Daten an das externe Leitsystem
   übermittelbar.

Somit wird einerseits die Steuerung des Streufahrzeuges von einer externen Leitstelle ermöglicht. Andererseits sind die von den Sensoren des Streufahrzeugs generierten Daten einfach an eine externe Leitstelle übermittelbar und können dort weiterverarbeitet, insbesondere in Precison-Farming-Gesamtkonzepte integriert, werden.

Weitere, die Erfindung verbessernde Maßnahmen, werden nachstehend mit der Beschreibung von bevorzugten Ausführungsbeispielen der Erfindung anhand der Figuren näher dargestellt.

Die Figuren zeigen:
- Fig. 1: zeigt ein Streufahrzeug in einer Seitenansicht;
- Fig. 2: zeigt das Streufahrzeug gemäß Fig. 1 in einer Ansicht von hinten;
- Fig. 3: zeigt den hinteren Teil des Streufahrzeuges in einer Draufsicht;
- Fig. 4: zeigt den hinteren Teil des Streufahrzeuges mit schematisch angedeuteten Grenzstreueinrichtungen;
- Fig. 5: zeigt einen Ausschnitt aus dem hinteren Teil des Streufahrzeuges in einer Draufsicht;
- Fig. 6: zeigt den hinteren Teil des Streufahrzeuges gemäß einer in Fig. 5 enthaltenen Schnittlinie A - A;
- Fig. 7a: zeigt eine schematische Darstellung eines zwei Streuteller umfassenden Streuwerkes in mit gegensinnig angetriebenen Streutellern;
- Fig. 7b: zeigt eine schematische Darstellung eines zwei Streuteller umfassenden Streuwerkes in mit gleichsinnig angetriebenen Streutellern;
- Fig. 7c: zeigt eine schematische Darstellung eines zwei Streuteller umfassenden Streuwerkes in mit stillgesetzten Streutellern.

Gleiche oder ähnliche Elemente können in den nachfolgenden Figuren mit gleichen oder ähnlichen Bezugszeichen versehen sein. Ferner enthalten die Figuren der Zeichnung, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht näher beschriebenen Kombinationen zusammengeführt werden können. Die Erfindung erstreckt sich ausdrücklich auch auf solche Ausführungsformen, welche nicht durch Merkmalskombinationen aus expliziten Rückbezügen der Ansprüche gegeben sind, womit die offenbarten Merkmale der Erfindung, soweit dies technisch sinnvoll ist, beliebig miteinander kombiniert sein können. Die in den Figuren dargestellten Ausführungsbeispiele haben somit nur beschreibenden Charakter und sind nicht dazu gedacht, die Erfindung in irgendeiner Form einzuschränken.

Die im Weiteren verwendeten Begriffe: "obere", "oben", "untere", "linke" oder "rechte" beziehen sich auf die in den Figuren dargestellte Anordnung des Streufahrzeuges beziehungsweise dessen Komponenten.

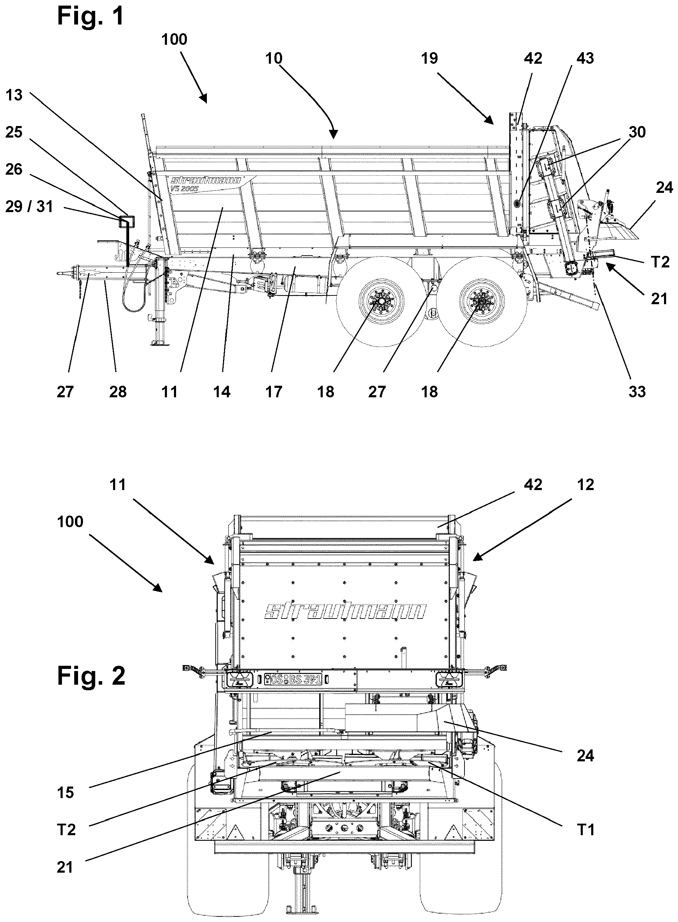

Die Figuren 1 und 2 zeigen ein als Stalldungstreuer ausgebildetes Streufahrzeug 100, das im Arbeitseinsatz von einem Zugfahrzeug, beispielsweise einem Traktor gezogen wird. Das Streufahrzeug 100 weist ein Fahrgestell 17 mit einer Deichsel 28 und zwei Achsen 18 auf. Auf dem Fahrgestell 17 befindet sich ein Laderaum 10 zur Aufnahme von auszubringendem Streugut 32. Der Laderaum 10 wird zu seinen Seiten hin durch eine Stirnwand 13, Seitenwände 11 und 12 sowie einen vor dem Streuwerk 19 befindlichen Stauschieber 42 begrenzt.

Der Laderaum 10 ist über eine Wiegeeinrichtung 27 an das Fahrgestell 17gekoppelt. Die Wiegeeinrichtung 27 erfasst somit das Eigengewicht des Laderaums 10 und der mit dem Laderaum 10 verbundenen Komponenten, insbesondere des Streuwerks 19. Wird ein so ausgestattetes Streufahrzeug 100 im unbeladenem Zustand auf Null tariert, so weist eine der Wiegeeinrichtung 27 zugeordnete Anzeigeeinrichtung nach der Beladung das Gewicht des Streuguts 32 aus. Als Gewichts-Anzeigeeinrichtung ist ein Display vorgesehen, welches im dargestellten Ausführungsbeispiel in eine Steuerungseinrichtung 25 integriert ist.

Die Steuerungseinrichtung 25 umfasst einen Datenspeicher 26 und Datenschnittstellen 29 und 31 auf, mittels derer Daten beispielsweise per USB-Stick und/oder drahtlos in die Steuerungseinrichtung 25 eingebbar und auslesbar sind. In der Steuerungseinrichtung oder einem zusätzlichen Gerät, beispielsweise einem mit der Steuerungseinrichtung über eine Leitung oder eine Funkverbindung gekoppelten Bediengerät, kann ein Display zur Eingabe von Steuerbefehlen vorgesehen sein.

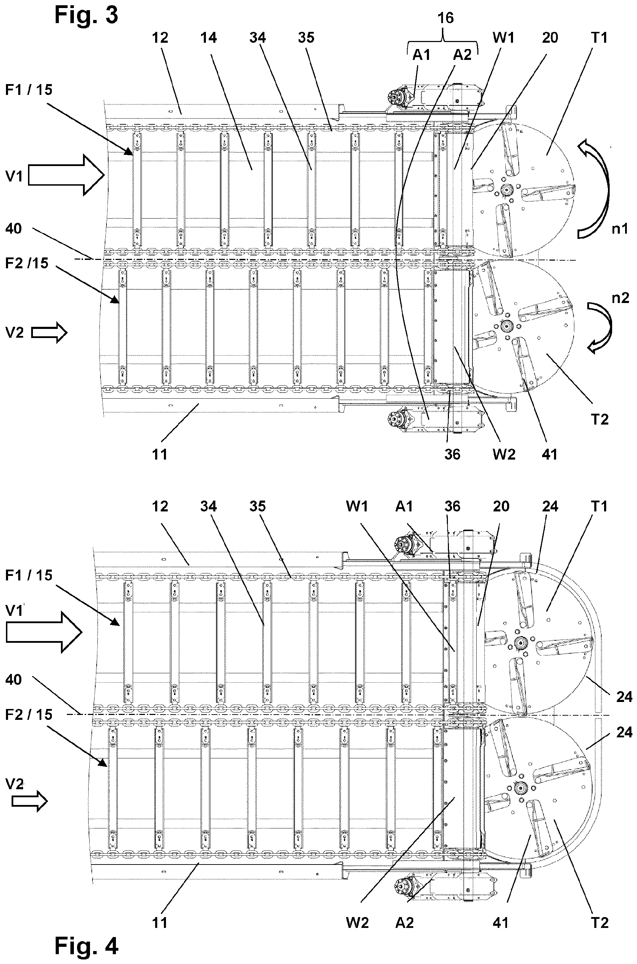

Der Laderaum 10 weist einen Boden 14 mit einer Transporteinrichtung 15 (vgl. Fig. 3) auf. Im dargestellten Ausführungsbeispiel umfasst die Transporteinrichtung 15 zwei Förderstränge F1 und F2, die durch den Boden 14 umlaufende Kratzböden gebildet werden. Die Transporteinrichtung 15 führt im Arbeitseinsatz das im Laderaum 10 befindliche Streugut 32 dem Streuwerk 19 zu. Dabei ist die Menge des dem Streuwerk 19 zugeführten Streuguts 32 von der Höheneinstellung des Stauschiebers 42 abhängig.

Das Streuwerk 19 umfasst zwei horizontal angeordnete Streuwalzen 30 sowie zwei Streuteller T1 und T2. Die Streuwalzen 30 zerkleinern und lösen das Streugut 32 auf, so dass es über eine am Boden 14 angeordnete hintere Kante 20 auf die Streuteller T1 und T2 fällt. Die Streuteller T1 und T2 sind auf einem Streutisch 21 angeordnet und rotieren im Arbeitseinsatz um einer vertikale oder gegenüber der vertikalen leicht geneigte Drehachse 33. Die Rotation der Streuteller T1 und T2 erfolgt je nach dem Anforderungsprofil an ein gewünschtes Streubild wahlweise im oder gegen den Uhrzeigesinn. Die rotierenden Streuteller T1, T2 beschleunigen das auf sie fallende Streugut 32, werfen es nach hinten ab und erzeugen hinter dem Streufahrzeug 100 einen Streuteppich. Die Breite und Dicke (kg/m²) ist durch Einstellung der insofern relevanten Streuparameter wie Förderstrang-Geschwindigkeit, Grenzstreueinrichtungs-Einstellung und Streuteller-Drehrichtung und - drehzahl regelbar ist.

Oberhalb des Streuteller T2 ist eine Grenzstreueinrichtung 24 angeordnet. Die Grenzstreueinrichtung 24 ist in den Auswurfbereich des Streutellers T2 einklappbar und ermöglicht eine mechanische Begrenzung des Streuwinkels β. Im dargestellten Ausführungsbeispiel ist lediglich dem Streuteller T1 eine Grenzstreueinrichtung 24 zugeordnet. Analog zum Streuteller T2 ist auch der Streuteller T2 mit einer Grenzstreueinrichtung 24 ausrüstbar. Alternativ zu der dargestellten Grenzstreueinrichtung 24, die einen Viertelkreis abdeckt, könnte auch eine anders ausgeführte Grenzstreueinrichtung vorgesehen sein. Beispielsweise könnte die Grenzstreueinrichtung in Form eines Leitblechs ausgeführt sein, welches den Streubereich auf einen vordefinierten, jedoch variabel einstellbaren, Auswurfwinkel begrenzt.

Die Figuren 3 und 4 zeigen eine Draufsicht auf den hinteren Bereich des Streufahrzeuges 100. Zur Verbesserung der Übersichtlichkeit sind die horizontalen Streuwalzen 30 und die Rahmen- und Schutzteile des Streuwerks 19 in den Figuren 3 und 4 nicht dargestellt.

Der Boden 14 wird im dargestellten Ausführungsbeispiel von zwei Fördersträngen F1 und F2, die gemeinsam die Transporteinrichtung 15 bilden, umlaufen. Die Förderstränge F1 und F2 sind als Kratzböden ausgeführt. Die Kratzböden werden in bekannter Weise durch Ketten 34 und die Ketten verbindende Förderleisten 35 gebildet.

Der Förderstrang F1 wird an seinem hinteren Ende, also im Bereich des Streuwerks 19 von einer Antriebswelle W1 und zwei darauf gelagerten Taschenkettenrädern 36 angetrieben. Die Antriebswelle W1 wird von einem Antrieb A1, bei dem es sich im dargestellten Ausführungsbeispiel um einen Hydraulikmotor handelt, angetrieben. Im vorderen Bereich des Streufahrzeuges 100, also im Bereich der Stirnwand 13, wird der Förderstrang F1 von einer in den Figuren nicht dargestellten Umlenkwelle um den Boden 14 geleitet.

Der Aufbau und der Antrieb des Förderstrangs F2 ist analog zu dem beschriebenen Aufbau und Antrieb des Förderstrangs F1 ausgeführt. Die beiden Antriebe A1 und A2 sind an den beiden Laderaum-Außenseiten angeordnet und bilden gemeinsam eine Antriebseinrichtung 16 des Streufahrzeuges. Wie die Figuren 2 und 3 zeigen ergibt sich durch die außenseitige Anordnung der Getriebe A1 und A2 im Bereich der Fahrzeug-Längsachse 40 ein minimaler Abstand zwischen den Fördersträngen F1 und F2.

Wesentlich ist, dass die beiden Förderstränge F1 und F2 unabhängig voneinander und mit unterschiedlichen Geschwindigkeiten V1 und V2 antreibbar sind. Die unterschiedlichen Geschwindigkeiten V1, V2 sind in den Figuren 3 und 4 durch unterschiedlich groß dargestellte Pfeile graphisch angedeutet.

Im dargestellten Ausführungsbeispiel sind auch die Streuteller T1 und T2 einzeln und mit unterschiedlichen Drehzahlen n1 und n2 - und damit auch mit unterschiedlichen Drehgeschwindigkeiten - antreibbar.

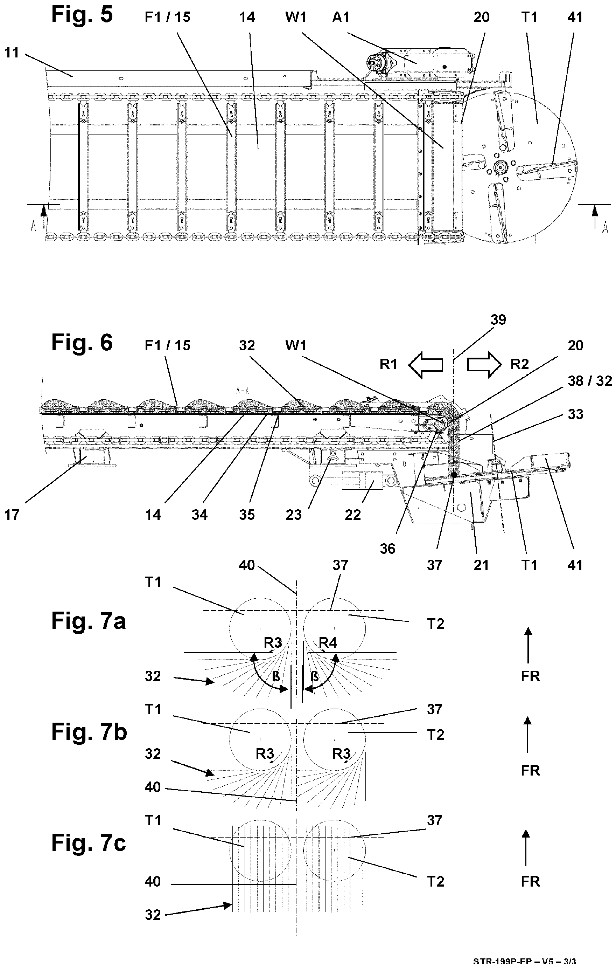

Wie in den Figuren 3 bis 6 gut erkennbar, überragt der Boden 14 die Streuteller T1 und T2 teilweise. Das von den Fördersträngen F1 und F2 in Richtung Streuwerk 19 geförderte Streugut 32 bildet einen Streugutstrom 38, welcher über die hintere Kante 20 des Bodens 14 von oben auf die Streuteller T1 und T2 fällt (vgl. Fig. 6). Der auf die Streuteller T1 und T2 fallende Streugutstrom 38 weist eine Mittelebene 39 auf. Die Kontaktlinie von Mittelebene 39 und der Ebene von Streuteller T1 und/oder Streuteller T2 wird als Aufgabelinie 37 bezeichnet.

Bei dem in Fig. 3 dargestellten Ausführungsbeispiel ist die Drehrichtung der Streuteller T1 und T2 entgegengesetzt zueinander und jeweils nach außen gerichtet. Da die Geschwindigkeit V2 des Förderstranges F2 und auch die Drehzahl n2 des Streutellers T2 kleiner sind als die Fördergeschwindigkeit F1 beziehungsweise die Drehzahl n1, ist ein so erzeugtes Streubild in Fahrtrichtung des Streufahrzeuges 100 gesehen asymmetrisch zu einer durch das Streufahrzeuges 100 verlaufenden Längsachse 40. Handelt es sich bei der für den Förderstrang F1 und den Streuteller T1 gewählten Einstellung um eine für ein größeres Flurstück vorgewählte Standard-Einstellung, so überlappt das durch den Streuteller T1 erzeugte Streubild das Streubild einer vorangegangen Parallelfahrt in der üblichen Weise. Dahingegen erzeugt der Streuteller T2 auf Grund der geringeren Menge an zugeführtem Streugut und der geringeren Drehzahl n2 einen schmaleren Streuteppich. Der einseitig schmalere Streuteppich ist für das Grenzstreuen einsetzbar. Dabei ist es auch möglich, die Streuparameter dynamisch anzupassen und bei einem keilförmig schmaler werdenden Flurstück den Streuteppich zur Grenzseite hin kontinuierlich schmaler werden zu lassen.

Bei der Darstellung gemäß Figur 4 sind oberhalb des Streuteller T1 und T2 angeordnete Grenzstreueinrichtungen 24 schematisch angedeutet. Im dargestellten Beispiel befinden sich die Grenzstreueinrichtungen 24 in einer Transportstellung und blockieren den Auswurfbereich der Streuteller T1 und T2. Die Grenzstreueinrichtungen 24 sind unabhängig voneinander in den Auswurfbereich der Streuteller T1, T2 ein- und ausschwenkbar. Alternativ zu der dargestellten, im Wesentlichen viertelkreisförmigen Kontur, können die Grenzstreueinrichtungen 24 auch einen kleineren Winkelbereich umschließen oder gestreckt und im Wesentlichen parallel zu den Seitenwänden 11 und 12 ausgerichtet sein.

Figur 5 zeigt einen Teilbereich des Streufahrzeuges 100 gemäß Figur 3 und enthält eine in Fahrzeuglängsrichtung verlaufende Schnittlinie A-A.

Figur 6 zeigt den Schnitt A-A gemäß Figur 5. Der Förderstrang F1 umläuft den Boden 14. Die Förderleisten 35 befördern das auf dem Boden 14 im Laderaum 10 enthaltene Streugut 32 in Richtung R2 zum Streuwerk 19. Das Streugut 32 ist lediglich als Restmenge schematisch angedeutet. Tatsächlich füllt es den Laderaum 10 im voll beladenen Zustand des Streufahrzeuges 100 komplett aus. Der durch das Streugut 32 gebildete Streugutstrom 38 umfasst somit in der Regel nicht nur die dargestellten Restmengen, sondern auch das darüber liegende und bis zur Oberkante der Seitenwände 11 und 12 reichende Streugut 32. Unabhängig davon, wie hoch der Laderaum 10 mit Streugut 32 gefüllt ist, wird dieses Streugut 32 sukzessive dem Streuwerk 19 zugeführt. Soweit das Streufahrzeug 100 einen Stauschieber 42 aufweist, wird die Menge des dem Streuwerk 19 zugeführten Streuguts durch die Höheneinstellung des Stauschiebers begrenzt. Das Streugut bildet den Streugutstrom 38, der je nach Füllzustand des Laderaums 10 und der Geschwindigkeit V1 des Förderstrangs F1 mehr oder weniger massereich sein kann.

Der Streugutstrom 38 hat eine Mittelebene 39. Im dargestellten Ausführungsbeispiel sind die Streuteller T1 und T2 auf dem Streutisch 21 gelagert. Der Streutisch 21 ist insgesamt mittels eines Hydraulikzylinders 22 gegenüber der hinteren Kante 20 des Bodens 14 verschiebbar. Die jeweils momentane Position des Streutisches 21 wird überwacht, indem ein Sensor 23, bei dem es sich beispielsweise um ein Wegmesssystem handeln kann, die Ausfahrlänge der Kolbenstange des Hydraulikzylinders 22 erfasst und an die Steuerungseinrichtung 25 übermittelt.

Bei einer Verschiebung des Streutisches 21 verschiebt sich auch die Aufgabelinie 37. Das Streugut 32, beziehungsweise der auf den Streutisch fallende Streugutteppich 38, wird von den Streutellern T1 und T2 und darauf angeordneten Wurfschaufeln 41 nach der Verlagerung der Aufgabelinie 37 anders erfasst, beschleunigt und ausgeworfen als vor der Verlagerung. Durch eine Verschiebung des Streutisches 21 und/oder der Streuteller T1, T2 lässt sich somit das Streubild beeinflussen und beispielsweise die Streubreite vergrößern oder verringern. Werden die übrigen Parameter, insbesondere die Geschwindigkeit V1, V2 der Förderstränge F1, F2 sowie die Drehzahlen n1, n2 der Streuteller T1, T2 konstant beibehalten, reduziert sich bei einer vergrößerten Streubreite die pro m² ausgebrachte Menge an Streugut 32. Umgekehrt erhöht sich die Menge pro m² bei schmalerer Streubreite.

Im dargestellten Ausführungsbeispiel ist der Streutisch insgesamt mittels des Hydraulikzylinders 22 verschiebbar. Alternativ oder ergänzend kann auch eine Vorrichtung zu einer Positionsverlagerung eines einzelne Streutellers T1, T2 vorgesehen sein.

Die Figuren 7a, 7b und 7c zeigen jeweils eine schematische Darstellung eines zwei Streuteller umfassenden Streuwerkes mit unterschiedlich angetriebenen Streutellern T1, T2 und den hieraus resultierenden Streubildern. In Fahrtrichtung FR des Streufahrzeuges gesehen fällt das Streugut 32 jeweils analog zu der in Fig. 6 gezeigten Weise im Bereich der Aufgabelinie 37 auf die Streuteller T1 und T2.

Bei der in Fig. 7a gezeigten gegenläufigen Antriebsweise wird das Streugut 32 entgegengesetzt zur Fahrtrichtung FR symmetrisch zur Längsachse 40 hinter dem Streufahrzeug 100 verteilt. Die Streu-Gesamtbreite kann je nach Streugut und Einstellung der Streuparameter beispielsweise 30 Meter betragen. Dabei reduziert sich die Ausbringmenge pro m² zu den Außenseiten hin. Dieser Effekt ist im praktischen Arbeitseinsatz durch eine überlappende Fahrweise zumindest weitgehend kompensierbar, so dass über ein zu düngendes Flurstück insgesamt mit weitgehend gleichen Ausbringmengen pro m² gedüngt werden kann.

Figur 7b symbolisiert ein Streuerfahrzeug 100, bei dem sich die Streuscheiben T1 und T2 in gleichsinniger Richtung drehen. Das Ergebnis ist eine asymmetrische Verteilung des Streugutes 32 in Bezug auf die Längsachse 40. Der Randbereich auf der Seite der umgesteuerten Streuscheibe 14b bleibt weitestgehend frei von Streugut.

Fig. 7c symbolisiert ein Streufahrzeug 100, bei dem beide Streuscheiben T1 und T2 stillgesetzt sind, sich also nicht drehen. Das Ergebnis ist eine gleichmäßig schmale Verteilung des Streuguts 32, deren Breite der Breite des Streufahrzeuges 100 entspricht und deren Ausbreitungsrichtung parallel zur Längsachse 40 des Streufahrzeuges 100 verläuft.

Die gezeigten Streubilder sind durch Änderung der Streuparameter in vielfältiger Form variierbar. Insbesondere ist es möglich, auf Basis von Test- oder Erfahrungswerten für unterschiedliche Streugüter und/oder unterschiedliche äußere Rahmenbedingungen (z. B.: Wind, Grenzstreuen) Vorgabewerte für die Streuparameter vorzudefinieren und diese im Datenspeicher 26 der Steuerungseinrichtung 25 zu speichern oder über eine Datenschnittstelle von einem externen Ort in die Steuerungseinrichtung 25 einzuspielen.

### Bezugszeichenliste

- 10: Laderaum
- 11: Seitenwand
- 12: Seitenwand
- 13: Stirnwand
- 14: Boden
- 15: Transporteinrichtung
- 16: Antriebseinrichtung
- 17: Fahrgestell
- 18: Achse
- 19: Streuwerk
- 20: hintere Kante (von 15)
- 21: Streutisch
- 22: Hydraulikzylinder
- 23: Sensoreinrichtung
- 24: Grenzstreueinrichtung
- 25: Steuerungseinrichtung
- 26: Datenspeicher
- 27: Wiegeeinrichtung
- 28: Deichsel
- 29: Daten-Schnittstelle
- 30: Streuwalze
- 31: Daten-Schnittstelle
- 32: Streugut
- 33: Drehachse (von T1, T2)
- 34: Kette
- 35: Förderleiste
- 36: Taschenkettenrad
- 37: Aufgabelinie
- 38: Streugutstrom
- 39: Mittelebene (von 38)
- 40: Längsachse (von 100)
- 41: Wurfschaufel
- 42: Stauschieber
- 43: Sensor (für 42)
- 100: Streufahrzeug

- A-A: Schnitt
- A1: Einzelantrieb
- A2: Einzelantrieb
- F1: Förderstrang
- F2: Förderstrang
- FR: Fahrtrichtung
- n1: Drehzahl (von T1)
- n2: Drehzahl (von T2)
- R1: Richtung
- R2: Richtung
- T1: Streuteller
- T2: Streuteller
- V1: Geschwindigkeit (von F1)
- V2: Geschwindigkeit (von (F2)
- W1: Antriebswelle (von F1)
- W2: Antriebswelle (von F2)

- ß: Streuwinkel

## Patentansprüche

1. Landwirtschaftliches Streufahrzeug (100) zur Ausbringung von organischem Dünger und Kalk umfassend
- einen Laderaum (10) zur Aufnahme von Düngematerial, welcher zwei Seitenwände (11, 12), eine Stirnwand (13) und einen Boden (14) mit einer Transporteinrichtung (15) umfasst,
- eine Antriebseinrichtung (16) für die Transporteinrichtung (15),
- ein Fahrgestell (17) mit wenigstens einer Fahrzeugachse (18),
- ein heckseitig angebrachtes Streuwerk (19) zur Ausbringung des Düngematerials,
**wobei** die Transporteinrichtung (15) zwei oder mehr unabhängig voneinander antreibbare Förderstränge (F1, F2, Fn) umfasst und je Förderstrang (F1, F2, Fn) ein Einzelantrieb (A1, A2, An) zum Antrieb einer für den jeweiligen Förderstrang (F1, F2, Fn) vorgesehene Antriebswelle (W1, W2, Wn) vorgesehen ist,
so dass die Förderstränge (F1, F2, Fn) von der Antriebseinrichtung (16) mit unterschiedlichen Geschwindigkeiten (V1, V2, Vn) antreibbar sind, und das Streufahrzeug (100) weiterhin umfasst:
- eine Steuerungseinrichtung (25) mit einem Datenspeicher (26), in welchem Werte für die Fördermenge je Förderstrang (F1, F2) in Abhängigkeit von der jeweiligen Antriebsgeschwindikeit (V1, V2) des Förderstrangs und/oder des Düngemittelmaterials hinterlegt sind, **dadurch gekennzeichnet, dass** das Streufahrzeug (100) weiterhin umfasst,
- eine Wiegeeinrichtung (27) zur kontinuierlichen Erfassung des Gewichts des im Laderaum (10) befindlichen Düngematerials, und
- eine Geschwindigkeitsmesseinrichtung zur Ermittlung einer Momentan-Fahrgeschwindigkeit des Streufahrzeugs (100) und/oder eine Daten-Schnittstelle (29) zur Übermittlung einer in einem das Streufahrzeug (100) ziehenden Zugfahrzeug gemessenen Momentangeschwindigkeit an die Steuerungseinrichtung (25),
so dass auf Basis der Sensordaten von der Steuerungseinrichtung (25) eine Ist-Ausbringmenge je Förderstrang (F1, F2) bestimmt wird und durch Änderung der Antriebsgeschwindigkeit (V1) des Förderstrangs (F1) und/oder der Antriebsgeschwindigkeit (V2) des Förderstrangs (F2) die Ist-Ausbringmenge je Förderstrang (F1, F2) an eine Soll-Ausbringmenge je Förderstrang (F1, F2) angepasst wird.

2. Landwirtschaftliches Streufahrzeug (100) nach Anspruch 1, **dadurch gekennzeichnet, dass** wenigstens ein Förderstrang (F1, F2, Fn), vorzugsweise alle Förderstränge (F1, F2, Fn) eine Sensoreinrichtung zur Erfassung der Geschwindigkeit V1 und/oder V2 und/oder Vn umfasst.

3. Landwirtschaftliches Streufahrzeug (100) nach einem der Ansprüche 1 oder 2, **dadurch gekennzeichnet, dass** das Streuwerk (19) wenigstens zwei Streuteller (T1, T2) zur Ausbringung des Düngermaterials aufweist, welche unterhalb einer hinteren Kante (20) des Bodens (14) angeordnet sind und wobei wenigstens ein Streuteller (T1, T2) gegenüber der hinteren Kante (20) der Transporteinrichtung (15) in eine Fahrzeuglängsrichtung (R1, R2) nach vorne beziehungsweise hinten bewegbar, vorzugsweise verschiebbar, ist.

4. Landwirtschaftliches Streufahrzeug (100) nach Anspruch 3, **dadurch gekennzeichnet, dass** die Streuteller (T1, T2) auf einem Streutisch (21) angeordnet sind und der Streutisch (21) gegenüber der hinteren Kante (20) des Bodens (14) in Fahrzeuglängsrichtung (R1, R2) nach vorne beziehungsweise hinten bewegbar, vorzugsweise verschiebbar ist.

5. Landwirtschaftliches Streufahrzeug (100) nach Anspruch 3 oder 4, **dadurch gekennzeichnet, dass** ein oder mehrere Hydraulikzylinder (22), zur direkten Positionsverlagerung der Streuteller (T1, T2) und/oder indirekten Positionsverlagerung der Streuteller (T1, T2) mittels des Streutisches (21) vorgesehen sind.

6. Landwirtschaftliches Streufahrzeug (100) nach einem der Ansprüche 3 bis 5, **dadurch gekennzeichnet, dass** eine Sensoreinrichtung (23) vorgesehen ist, mittels derer die Position der Streuteller (T1, T2) und/oder des Streutisches (21) relativ zur hinteren Kante (20) des Bodens (14) bestimmbar ist.

7. Landwirtschaftliches Streufahrzeug (100) nach einem der Ansprüche 3 bis 6, **dadurch gekennzeichnet, dass** die wenigstens zwei Streuteller (T1, T2) mit unterschiedlichen Drehzahlen (n1, n2) antreibbar sind.

8. Landwirtschaftliches Streufahrzeug (100) nach einem der Ansprüche 1 bis 7, **dadurch gekennzeichnet, dass** das Streuwerk (19) wenigstens eine verstellbare Grenzstreueinrichtung (24) zur Begrenzung eines Streuwinkels (β) umfasst.

9. Landwirtschaftliches Streufahrzeug (100) nach einem der Ansprüche 1 bis 8, **dadurch gekennzeichnet, dass** zwischen Laderaum (10) und Streuwerk (19) ein höhenverstellbarer Stauschieber (42) zur Begrenzung der Menge des dem Streuwerk (19) zugeführten Streuguts (32) vorgesehen und die Position des Stauschiebers mittels eines Sensors (43) bestimmbar ist.

10. Landwirtschaftliches Streufahrzeug (100) nach Anspruch 1, **dadurch gekennzeichnet, dass** das Streufahrzeug (100) eine Positionserfassungseinrichtung (30), beispielsweise ein GPS-System oder eine Daten-Schnittstelle (31) zur Übermittlung einer in einem den Streufahrzeug ziehenden Zugfahrzeug gemessenen momentanen Ortsposition, umfasst, und die Steuerungseinrichtung (25) auf Basis der von:
- der Positionserfassungseinrichtung (30),
- der Wiegeeinrichtung (27) und
- der Geschwindigkeitsmesseinrichtung beziehungsweise der über die Daten-Schnittstelle (29) an die Steuerungseinrichtung (25) übermittelten Geschwindigkeitsdaten die Antriebsgeschwindigkeit (V1, V2) der Förderstränge (F1, F2) steuert, so dass eine pro Flächeneinheit ausgebrachte Ist-Düngermenge an eine für diese Flächeneinheit vordefinierte Soll-Ausbringmenge anpassbar und eine zu düngende Fläche teilflächenspezifisch mit Dünger beaufschlagbar ist.

11. Landwirtschaftliches Streufahrzeug (100) nach einem der Ansprüche 1 oder 10, **dadurch gekennzeichnet, dass** die Steuerungseinrichtung (25) bei der Anpassung der pro Flächeneinheit ausgebrachte Ist-Düngermenge an eine für diese Flächeneinheit vordefinierte Soll-Ausbringmenge
- die Geschwindigkeit der Förderstränge (F1, F2) und/oder
- die Drehzahl (n1, n2) der Streuteller (T1, T2) und/oder deren Position relativ zur hinteren Kante (20) der Transporteinrichtung (15) und/oder
- den Streuwinkel (β) der wenigstens einen Grenzstreueinrichtung (24) und/oder
- die Höheneinstellung des Stauschiebers (42)
regelt.

12. Landwirtschaftliches Streufahrzeug (100) nach einem der Ansprüche 1, 10 oder 11, **dadurch gekennzeichnet, dass** im Datenspeicher (26) der Steuerungseinrichtung (25) eine Produktdatenbank hinterlegt ist, in welcher Parameterkombinationen aus Fahrgeschwindigkeit und/oder Förderstrang-Antriebsgeschwindigkeit und/oder Streutellerdrehzahl und/oder Streutellerposition und/oder die Position der Grenzstreueinrichtung und/oder Stauschieberöffnungsweite für unterschiedliche Düngermaterialien vordefiniert sind und bei Vorgabe eines vordefinierten Düngermaterials die genannten Parameter auf die für dieses Düngermaterial vordefinierten Parameterwerte von der Steuerungseinrichtung (25) einstellbar sind.

13. Landwirtschaftliches Streufahrzeug (100) nach einem der Ansprüche 1, 10, 11 oder 12, **dadurch gekennzeichnet, dass** der Datenspeicher (26) eine Schnittstelle zur Verarbeitung extern übermittelter oder zu übermittelnder Daten, beispielsweise eine USB-Schnittstelle oder eine Sende/Empfangseinheit zum drahtlos Ein- und/oder Auslesen von Daten in den Datenspeicher (26), umfasst, wobei über die Schnittstelle
- Steuerdaten von einem externen Leitsystem an die Steuerungseinrichtung (25) übermittelbar sind und/oder
- von den Sensoren des landwirtschaftlichen Streufahrzeuges (100) ermittelte Ist-Daten an das externe Leitsystem übermittelbar sind.

## Claims

1. Agricultural spreading vehicle (100) for spreading organic fertiliser and lime comprising
- a loading space (10) for receiving fertiliser material, which comprises two side walls (11, 12), an end wall (13) and a floor (14) with a transport device (15),
- a drive device (16) for the transport device (15),
- a chassis (17) with at least one vehicle axle (18),
- a spreading mechanism (19) mounted at the rear for spreading the fertiliser material,
wherein the transport device (15) comprises two or more independently drivable conveyor lines (F1, F2, Fn) and an individual drive (A1, A2, An) is provided for each conveyor line (F1, F2, Fn) for driving a drive shaft (W1, W2, Wn) provided for the respective conveyor line (F1, F2, Fn),
so that the conveyor lines (F1, F2, Fn) can be driven by the drive device (16) at different speeds (V1, V2, Vn) and the spreading vehicle (100) further comprises
- a control device (25) with a data memory (26), in which values for the delivery rate per delivery line (F1, F2) are stored as a function of the respective drive speed (V1, V2) of the delivery line and/or the fertiliser material,
**characterised in that** the spreading vehicle (100) further comprises
- a weighing device (27) for continuously recording the weight of the fertiliser material in the loading space (10) and
- a speed measuring device for determining an instantaneous travelling speed of the spreading vehicle (100) and/or a data interface (29) for transmitting an instantaneous speed measured in a towing vehicle pulling the spreading vehicle (100) to the control device (25),
so that an actual spread rate per conveyor line (F1, F2) is determined by the control device (25) on the basis of the sensor data and the actual spread rate per conveyor line (F1, F2) is adapted to a target spread rate per conveyor line (F1, F2) by changing the drive speed (V1) of the conveyor line (F1) and/or the drive speed (V2) of the conveyor line (F2).

2. Agricultural spreading vehicle (100) according to claim 1, **characterised in that** at least one conveyor line (F1, F2, Fn), preferably all conveyor lines (F1, F2, Fn), comprises a sensor device for detecting the speed V1 and/or V2 and/or Vn.

3. Agricultural spreading vehicle (100) according to one of claims 1 or 2, **characterised in that** the spreading mechanism (19) has at least two spreading discs (T1, T2) for spreading the fertiliser material, which are arranged below a rear edge (20) of the floor (14) and wherein at least one spreading disc (T1, T2) is movable, preferably displaceable, forwards or backwards relative to the rear edge (20) of the transport device (15) in a longitudinal direction (R1, R2) of the vehicle.

4. Agricultural spreading vehicle (100) according to claim 3, **characterised in that** the spreading discs (T1, T2) are arranged on a spreading table (21) and the spreading table (21) is movable, preferably displaceable, forwards or backwards relative to the rear edge (20) of the floor (14) in the longitudinal direction (R1, R2) of the vehicle.

5. Agricultural spreading vehicle (100) according to claim 3 or 4, **characterised in that** one or more hydraulic cylinders (22) are provided for direct positional displacement of the spreading discs (T1, T2) and/or indirect positional displacement of the spreading discs (T1, T2) by means of the spreading table (21).

6. Agricultural spreading vehicle (100) according to one of claims 3 to 5, **characterised in that** a sensor device (23) is provided, by means of which the position of the spreading discs (T1, T2) and/or of the spreading table (21) relative to the rear edge (20) of the floor (14) can be determined.

7. Agricultural spreading vehicle (100) according to one of claims 3 to 6, **characterised in that** the at least two spreading discs (T1, T2) can be driven at different speeds (n1, n2).

8. Agricultural spreading vehicle (100) according to one of claims 1 to 7, **characterised in that** the spreading mechanism (19) comprises at least one adjustable boundary spreading device (24) for limiting a spreading angle (β).

9. Agricultural spreading vehicle (100) according to one of claims 1 to 8, **characterised in that** a height-adjustable filling piston (42) for limiting the quantity of spreading material (32) fed to the spreading mechanism (19) is provided between the loading space (10) and the spreading mechanism (19) and the position of the filling piston can be determined by means of a sensor (43).

10. Agricultural spreading vehicle (100) according to claim 1, **characterised in that** the spreading vehicle (100) comprises a position detection device (30), for example a GPS system or a data interface (31) for transmitting an instantaneous local position measured in a towing vehicle towing the spreading vehicle, and the control device (25) controls on basis of the speed data from:
- the position detection device (30),
- the weighing device (27), and
- the speed measuring device or transmitted to the control device (25) via the data interface (29)
the drive speed (V1, V2) of the conveyor lines (F1, F2) so that an actual fertiliser quantity applied per unit area can be adapted to a target application quantity predefined for this unit area and fertiliser can be applied to an area to be fertilised in a site-specific manner.

11. Agricultural spreading vehicle (100) according to one of claims 1 or 10, **characterised in that** the control device (25), when adapting the actual quantity of fertiliser applied per unit area to a predefined target application quantity for this unit area controls
- the speed of the conveyor lines (F1, F2) and/or
- the speed (n1, n2) of the spreading discs (T1, T2) and/or their position relative to the rear edge (20) of the transport device (15) and/or
- the spreading angle (β) of the at least one boundary spreading device (24) and/or
- the height setting of the filling piston (42).

12. Agricultural spreading vehicle (100) according to one of claims 1, 10 or 11, **characterised in that** a product database is stored in the data memory (26) of the control device (25), in which parameter combinations of travelling speed and/or conveyor line drive speed and/or spreading disc speed and/or spreading disc position and/or the position of the boundary spreading device and/or filling piston opening width are predefined for different fertiliser materials and, when a predefined fertiliser material is specified, the said parameters can be set by the control device (25) to the parameter values predefined for this fertiliser material.

13. Agricultural spreading vehicle (100) according to one of claims 1, 10, 11 or 12, **characterised in that** the data memory (26) comprises an interface for processing externally transmitted data or data to be transmitted, for example a USB interface or a transmitter/receiver unit for wirelessly reading data into and/or out of the data memory (26), wherein via the interface
- control data from an external control system can be transmitted to the control device (25) and/or
- actual data determined by the sensors of the agricultural spreading vehicle (100) can be transmitted to the external control system.

## Revendications

1. Véhicule d'épandage agricole (100) pour l'épandage d'engrais organique et de chaux comprenant
- un compartiment de chargement (10) pour recevoir de l'engrais, qui comprend deux parois latérales (11, 12), une paroi frontale (13) et un sol (14) avec un dispositif de transport (15),
- un dispositif d'entraînement (16) pour le dispositif de transport (15),
- un châssis (17) avec au moins un essieu de véhicule (18),
- un mécanisme d'épandage (19) monté à l'arrière pour l'épandage de l'engrais,
en ce que le dispositif de transport (15) comprenant deux ou plusieurs lignes de transport (F1, F2, Fn) pouvant être entraînées indépendamment les unes des autres et un entraînement individuel (A1, A2, An) étant prévu pour chaque ligne de transport (F1, F2, Fn) pour entraîner un arbre d'entraînement (W1, W2, Wn) prévu pour la ligne de transport respective (F1, F2, Fn),
de sorte que les lignes de transport (F1, F2, Fn) peuvent être entraînées par le dispositif d'entraînement (16) à des vitesses différentes (V1, V2, Vn) et le véhicule d'épandage (100) comprend en outre:
- un dispositif de commande (25) avec une mémoire de données (26) dans laquelle sont enregistrées des valeurs pour la quantité transportée par ligne de transport (F1, F2) en fonction de la vitesse d'entraînement respective (V1, V2) de la ligne de transport et/ou du matériau fertilisant,
**caractérisé en ce que** le véhicule d'épandage (100) comprend en outre :
- un dispositif de pesage (27) pour la saisie continue du poids du matériau fertilisant se trouvant dans le compartiment de chargement (10) et
- un dispositif de mesure de la vitesse pour déterminer une vitesse de déplacement instantanée du véhicule d'épandage (100) et/ou une interface de données (29) pour transmettre au dispositif de commande (25) une vitesse instantanée mesurée dans un véhicule tracteur tirant le véhicule d'épandage (100),
de sorte que, sur la base des données de capteur, le dispositif de commande (25) détermine un débit réel par ligne de transport (F1, F2) et, en modifiant la vitesse d'entraînement (V1) de la ligne de transport (F1) et/ou la vitesse d'entraînement (V2) de la ligne de transport (F2), adapte le débit réel par ligne de transport (F1, F2) à un débit de consigne par ligne de transport (F1, F2).

2. Véhicule d'épandage agricole (100) selon la revendication 1, **caractérisé en ce qu'**au moins une ligne de transport (F1, F2, Fn), de préférence toutes les lignes de transport (F1, F2, Fn), comprend un dispositif de détection pour détecter la vitesse V1 et/ou V2 et/ou Vn.

3. Véhicule d'épandage agricole (100) selon l'une des revendications 1 ou 2, **caractérisé en ce que** le mécanisme d'épandage (19) comporte au moins deux disques d'épandage (T1, T2) pour l'épandage de l'engrais, qui sont disposés en dessous d'un bord arrière (20) du sol (14), et au moins un disque d'épandage (T1, T2) pouvant être déplacé vers l'avant ou vers l'arrière par rapport au bord arrière (20) du dispositif de transport (15) dans une direction longitudinale (R1, R2) du véhicule, de préférence de manière coulissante.

4. Véhicule d'épandage agricole (100) selon la revendication 3, **caractérisé en ce que** les disques d'épandage (T1, T2) sont disposés sur une table d'épandage (21) et **en ce que** la table d'épandage (21) peut être déplacée, de préférence coulissée, vers l'avant ou l'arrière par rapport au bord arrière (20) du sol (14) dans la direction longitudinale (R1, R2) du véhicule.

5. Véhicule d'épandage agricole (100) selon la revendication 3 ou 4, **caractérisé en ce qu'**un ou plusieurs vérins hydrauliques (22) sont prévus pour le déplacement de position direct des disques d'épandage (T1, T2) et/ou le déplacement de position indirect des disques d'épandage (T1, T2) au moyen de la table d'épandage (21).

6. Véhicule d'épandage agricole (100) selon l'une des revendications 3 à 5, **caractérisé en ce qu'**il est prévu un dispositif de détection (23) au moyen duquel la position des disques d'épandage (T1, T2) et/ou de la table d'épandage (21) par rapport au bord arrière (20) du sol (14) peut être déterminée.

7. Véhicule d'épandage agricole (100) selon l'une des revendications 3 à 6, **caractérisé en ce que** les au moins deux disques d'épandage (T1, T2) peuvent être entraînés à des vitesses de rotation différentes (n1, n2).

8. Véhicule d'épandage agricole (100) selon l'une des revendications 1 à 7, **caractérisé en ce que** le mécanisme d'épandage (19) comprend au moins un dispositif d'épandage limite (24) réglable pour limiter un angle d'épandage (β).

9. Véhicule d'épandage agricole (100) selon l'une des revendications 1 à 8, **caractérisé en ce qu'**il est prévu entre le compartiment de chargement (10) et le mécanisme d'épandage (19) un piston de refoulement (42) réglable en hauteur pour limiter la quantité de produit à épandre (32) amenée au mécanisme d'épandage (19), et la position de le piston de refoulement peut être déterminée au moyen d'un capteur (43).

10. Véhicule d'épandage agricole (100) selon la revendication 1, **caractérisé en ce que** le véhicule d'épandage (100) comprend un dispositif de détection de position (30), par exemple un système GPS ou une interface de données (31) pour la transmission d'une position locale momentanée mesurée dans un véhicule tracteur tirant le véhicule d'épandage, et le dispositif de commande (25) sur la base:
- du dispositif de détection de position (30),
- du dispositif de pesage (27) et
- du dispositif de mesure de la vitesse ou des données de vitesse transmises au dispositif de commande (25) via l'interface de données (29)
commande la vitesse d'entraînement (V1, V2) des lignes de transport (F1, F2), de sorte qu'une quantité réelle d'engrais épandue par unité de surface peut être adaptée à une quantité d'épandage de consigne prédéfinie pour cette unité de surface et qu'une surface à fertiliser peut être alimentée en engrais de manière spécifique à la surface partielle.

11. Véhicule d'épandage agricole (100) selon l'une des revendications 1 ou 10, **caractérisé en ce que** le dispositif de commande (25), lors de l'adaptation de la quantité réelle d'engrais épandue par unité de surface à une quantité d'épandage de consigne prédéfinie pour cette unité de surface, régle :
- la vitesse des lignes de transport (F1, F2) et/ou
- la vitesse de rotation (n1, n2) des disques d'épandage (T1, T2) et/ou leur position par rapport au bord arrière (20) du dispositif de transport (15) et/ou
- l'angle d'épandage (β) de l'au moins un dispositif d'épandage limite (24) et/ou
- le réglage en hauteur de le piston de refoulement (42).

12. Véhicule d'épandage agricole (100) selon l'une des revendications 1, 10 ou 11, **caractérisé en ce qu'**une base de données de produits est enregistrée dans la mémoire de données (26) du dispositif de commande (25), dans laquelle sont prédéfinies des combinaisons de paramètres de vitesse de déplacement et/ou de vitesse d'entraînement de la bande transporteuse et/ou de vitesse de rotation du disque d'épandage et/ou de position du disque d'épandage et/ou de position du dispositif d'épandage en limite et/ou de largeur d'ouverture du piston de refoulement pour différents matériaux fertilisants et, en cas de prédéfinition d'un matériau fertilisant prédéfini, lesdits paramètres peuvent être réglés par le dispositif de commande (25) sur les valeurs de paramètres prédéfinies pour ce matériau fertilisant.

13. Véhicule d'épandage agricole (100) selon l'une des revendications 1, 10, 11 ou 12, **caractérisé en ce que** la mémoire de données (26) comprend une interface pour le traitement de données transmises ou à transmettre de l'extérieur, par exemple une interface USB ou une unité d'émission/réception pour l'entrée et/ou la lecture sans fil de données dans la mémoire de données (26), où par l'intermédiaire de l'interface
- des données de commande peuvent être transmises d'un système de gestion externe au dispositif de commande (25) et/ou
- des données réelles déterminées par les capteurs du véhicule d'épandage agricole (100) peuvent être transmises au système de commande externe.
